# EUROPÄISCHE PATENTSCHRIFT

(11) **EP 1 812 729 B1**
(45) Veröffentlichungstag und Bekanntmachung des Hinweises auf die Patenterteilung: **10.08.2011**
(21) Anmeldenummer: 05808291.8
(22) Anmeldetag: 17.11.2005
(51) Int. Cl.: F16G 3/04

(54) **BAND ODER GURT MIT EINEM AN SEINEM ENDE ANGEBRACHTEN DRAHTHAKENVERBINDER**
BAND OR BELT END PROVIDED AT ITS END WITH A WIRE-HOOK CONNECTOR
BANDE OU COURROIE POURVUE A SON EXTREMITE D'UN ASSEMBLAGE A AGRAFES

(30) Priorität: 01.09.2005 DE 102005041683
(43) Veröffentlichungstag der Anmeldung: 01.08.2007
(73) Patentinhaber: Wilhelm Sülzle E.K., 72348 Rosenfeld (DE)
(72) Erfinder: SÜLZLE, Walther, 72348 Rosenfeld (DE)
(74) Vertreter: Säger, Manfred
(86) Internationale Anmeldenummer: PCT/EP2005/012331
(87) Internationale Veröffentlichungsnummer: WO 2007/025567

(56) Entgegenhaltungen:
- EP-A- 1 338 825
- CH-A- 221 375
- DE-C- 732 524
- DE-C- 826 723
- FR-A- 946 203
- GB-A- 355 984
- GB-A- 355 984
- GB-A- 190 924 564
- US-A- 355 984
- US-A- 948 574
- US-A- 2 420 783
- US-A- 2 481 085

## Beschreibung

Die Erfindung betrifft ein mit Drahthakenverbindern versehenes gattungsgemässes Ende eines Bandes oder Gurtes unter Bildung einer sogenannten Bandnaht nach dem Oberbegriff des Hauptanspruchs .

Solche mechanischen Drahthakenverbinder, bei denen das Trägermaterial aus Papier besteht, sind -als "papiergefasst" genannt- bekannt (DE 36 42 803 A1). Die einzelen Drahthaken solcher Drahthakenverbinder weisen V-förmig vorgebogene, unterschiedlich lange Hakenschenkel auf. An beiden Hakenschenkelenden befinden sich aufeinanderzu laufende Hakenspitzen, die mittels geeigneter Vorrichtungen und Maschinen in das Ende z.B. eines Transportbandes, nachfolgend auch kurz Band genannt, oder Fördergurts, nachfolgend auch kurz Gurt genannt, zur Erzielung einer Verbindung zwischen einem anderen Ende eines Bandes in dieses eingepresst, indem in die Lücken zwischen den Drahthaken des einen Endes des Bandes die vorspringenden Drahthaken des anderen Endes des anderen Bandes eingesetzt und durch die dabei gebildete durchgängige Öffnung ein Kupplungsstab hindurchgesteckt wird.

Diese bekannten, insbesondere papiergefassten Drahthakenverbinder haben sich speziell bei Einsätzen in der Wäschereiindustrie und in Bandfiltern bestens bewährt, weil die Bandnaht nach einigen Wochen Laufzeit -aufgrund sehr unterschiedlicher Belastungen über die gesamte Bandbreite hinweg- selten gerade ist, sondern sich häufig wellenförmig ausbildet.

Bei den bekannten papiergefassten Drahthakenverbindern übernimmt das Trägermaterial aus Papier hierbei eine Abstandshalterungsfunktion der einzelnen Drahthaken bis zu deren Montage ein. Auch während des Einpressens dient das Trägermaterial zur Führung der Drahthaken, sodass diese alle in einer Richtung gleichmässig gebogen werden. Nach dem Einpressen muss das dann nicht mehr benötigte sowie sogar störenden Papier des Streifens wieder entfernt werden. Dies ist, je nach Band- oder Gurtdicke, Länge der Hakenspitzen und verwendetem Pressdruck bei der Montage zum Teil sehr zeitaufwändig, da die Hakenspitzen das Papier durchstechen und es festklemmen.

Bänder in der Wäschereiindustrie, Filterbänder und Wellpappgurte werden in der Praxis im Verbindungsbereich häufig vorbehandelt, d.h. es wird der Bereich der Bandnaht mit verschiedenen Verfahren stabilisiert, damit der Drahthakenverbinder besseren Halt findet, bzw. mit höherem Pressdruck montiert werden kann. Weiter dient diese Art der Vorbehandlung auch dazu, dass der Drahthakenverbinder unter Zugbelastung das Band nicht auskämmt.

Vielfach werden die Drahthakenverbinder in einem weiteren Arbeitsgang abgedeckt. Dies dient zum einen zum Schütz des Drahthakenverbinders gegen Abrieb und zum anderen zum Schutz des Förderguts gegen Beschädigungen durch eventuell herausragende, spitze Teile der einzelnen Drahthaken.

Die Vorbehandlung der zum Teil in Längsrichtung elastischen Gurte erfolgt z.B. in der Wäschereiindustrie durch Eintauchen der beiden Enden des Gurts in Klarlack oder Klebstoff mit anschliessendem Trockungsvorgang von zum Teil mehreren Stunden bis der Lack oder Klebstoff ausgehärtet ist und beim Montieren nicht die Maschine oder Vorrichtung zur Montage verklebt. Alternativ werden Patches durch Thermotransferverfahren aufgeklebt oder um die Bandenden gelegt und aufgenäht. Alle bisher verwendeten Verfahren erfordern mehrere Arbeitsgänge und sind zeitaufwändig. Sämtliche Maßnahmen dienen letztendlich dazu, das Band vor dem Ausfransen zu schützen. Der Schutz des Förderguts, in der Wäschereiindustrie zum Beispiel Frotteehandtücher, vor Beschädigungen ist bei diesen bekannten Verfahren nicht gelöst. Ein weiterer Lösungsvorschlag zum Schutz des Förderguts besteht in Drahthakenverbindern, deren einzelne Drahthaken mit einem Querdraht, sogenannte Querdrahthakenverbinder, verbunden sind (EP 1 338 825 A).

In der Bandfilterindustrie wird der Verbindungsbereich z.B. mit Zwei-Komponenten-Klebstoffen vor der Montage verdichtet. Auch hier ist die Trocknungszeit des Klebers, bis die Drahthakenverbinder schliesslich montiert werden können, nicht nur aufgrund des benötigten Lagerplatzes von überragender Bedeutung für den Fertigungsablauf.

In der Wellpappindustrie schliesslich werden die Bänder, zum Teil unter Zuführung von Wärme bis zu 200°C vorverdichtet. Anschliessend werden die Drahthakenverbinder montiert. Danach werden diese zum Teil beschichtet, um eine schädliche antistatische Aufladung bei deren Produktionsprozess zu verhindern und den Abrieb des Drahthakenverbinders zu reduzieren.

In anderen Industriebereichen werden die Drahthakenverbinder in das Band "eingelassen". Dies geschieht zum einen durch das Aufheizen der Drahthakenverbinder während oder nach der Montage und zum Anderen durch das Abnehmen der Banddecken auf deren Bandober- und/oder auf deren Bandunterseite mit anschliessendem wiederaufvulkanisieren der entfernten Decken nach der Montage der Drahthakenverbinder.

Die vorstehend genannten Querdrahthaken, also einzelne Drahthaken, die an einem Querdraht festgelegt, z.B. aufgeschweisst sind und für die deshalb kein Papier als Trägermaterial benötigt wird, sind seit vielen Jahren bekannt. Der Einsatz solcher Drahthakenverbinder in den vorstehened genannten Industrien und den dort verwendeten Bändern und Gurten ist aber eingeschränkt. So kommt es z.B. vor, daß z.B. aufgrund balliger Trommeln der Querdraht bricht und herausstehende Drahtteile, trotz Abdeckung zu Beschädigungen des Förderguts führen. Auch die Verletzungsgefahr des Bedienungspersonals an der Maschine durch kleine herausstehende Drahtteile ist nicht zu übersehen. Aufgrund nicht paralleler Verläufe der Bandnaht treten bei Filterbändern und Wellpappgurten zum Teil Querdrahtbrüche auf, wobei Reststücke zum Teil in das Filtergut gelangen. Um dieses Risiko zu minimieren, wird bei diesem bekannten Drahthakenverbinder über die Reihe der Drahthaken bei der Herstellung oder vor dem Montieren noch ein zusätzliches Abdeckelement gelegt, das nach der Montage eine Abdeckfunktion, insbesondere für den Querdraht erfüllt (EP 1 338 825 A).

Es ist ferner ein Drahthakenverbinder mit nur einem einzigen Streifen aus Trägermaterial bekannt (GB 24,564), bei dem jeder Drahthaken in einer oder zwei Ausstanzungen der Vielzahl voneinander beabstandeten sowie zueinander parallelen Ausnehmungen fixiert ist. Nachdem Einpressen in den Gurt oder das Band wird der Streifen wieder entfernt.

Schliesslich ist ein gattungsgemässer, an Ende eines Gurtes oder Bandes angebrachter Drahthakenverbinder bekannt (GB 355,984), dessen einzelne Drahthaken an zwei separaten Streifen aus Trägermaterial aus Textilgewebe oder als Folie aus Kunststoff festgelegt sind, die jeweils an einem Schenkel der Drahthaken angreifen. Diese sind an der dem Band oder Gurt abgewandten Seite zur Beibehaltung einer definierten Relativlage an die beiden Streifen des Trägermaterials angeklebt, das nach dem Einpressen an den Drahthaken verbleibt.

Der Erfindung liegt die Aufgabe zugrunde, einen gattungsgemässen Drahthakenverbinder einfacher und weniger aufwändig montierbar auszugestalten.

Diese Aufgabe wird bei einem gattungsgemäßen Drahthakenverbinder gemäß dem Oberbegriff des Hauptanspruches erfindungsgemäß durch dessen kennzeichnende Merkmale gelöst.

Es wird also bei dem Drahthakenverbinder statt der üblichen Papier- bzw. Kartonfassung ein Trägermaterial aus einem Gewebeklebeband eingesetzt. Dieses Trägermaterial wird mit der Teilung des jeweils zum Einsatz kommenden Drahthakens z.B. vorgestanzt. Danach werden die Drahthakenverbinder in die durch die Stanzung entstandenen Ausnehmungen eingesetzt und verpackt. Wie beim Stand der Technik übernimmt das Trägermaterial die Funktion der Halterung beim Transport und das Führen der einzelnen Drahthaken bei der Montage bis zum endgültigen Fixieren der Drahthaken an dem Band oder Gurt; es muss im Gegensatz dazu nach dem Einpressen aber nicht entfernt werden. Vielmehr umgibt das von den einzelnen Drahthaken festgelegte Trägermaterial auch das abgetrennte und damit weniger feste Ende an der Kante des Bandes oder Gurtes und stabilisiert es auf diese Weise. Die Drahthakenverbinder nach der Erfindung sind also einfacher und weniger aufwändig montierbar ausgestaltet, nicht zuletzt auch, weil es keines Querdrahtes bedarf. Erfindungsgemäss ist das Trägermaterial aus Textilgewebe ggf. mit Klebstoff vorbeschichtet oder einseitig mit Thermoplasten ausgerüstet, so dass es durch die Abgabe von Wärme über die Pressbacken der Vorrichtung zur Montage bei der Bildung der sogenannten Bandnaht beim Einpressen der einzelnen Drahthaken in das Ende eines Gurtes oder Bandes mit diesem verkleben oder verschmelzen kann.

Neben der einfacheren Montage trägt das thermisch montierte Trägermaterial erheblich zur Stabilisierung des Bereichs der Bandnaht bei und ersetzt die vorgenannten bekannten Verfahren zur Stabilisierung der Kanten des Bandes oder Gurtes. Weiterhin werden die Drahthaken grösstenteils von dem Trägermaterial abgedeckt, was deren Verschleiss und Abrieb erheblich verringert und damit die Lebensdauer des mechanischen Drahthakenverbinders erhöht. Das Trägermaterial nach Lehre der Erfindung ist durch die oben geschilderten Vorteile vielseitig einsetzbar, und zwar für die einzelnen Drahthaken als Halter bei der Herstellung des Drahthakenverbinders und bei dessen Transport, als Führungselement bei der Montage, als Abdeckung der Bandnaht und schliesslich als Höhennivellierung der Bandnaht.

Von herausragender Bedeutung ist, dass alle diese Vorteile mit einem einzigen Arbeitsgang bei der Herstellung der Bandnaht, d.h. weniger aufwändig als beim Stand der Technik, erreicht werden können.

Durch Einsatz verschiedenfarbiger Thermoplaste und Folien kann schließlich eine farbliche Anpassung der Verbindung an das jeweilige Band bzw. Gurt erzielt werden. Ein Zusatznutzen entsteht weiter durch das Vordrucken der Textilbänder und Folien mit Kundeninfoztnationen z.B. Logo, Telefonnummer, Teilenummer, so daß der Endkunde bei Defekten sofort Ersatz beschaffen kann. Mit Vorteil ist daher bei Einsatz von Drahthakenverbinder nach der Erfindung auch das mit dem Band zu fördernde Gut besser vor Beschädigungen geschützt.

Weitere zweckmäßige Ausgestaltungen und Weiterbildungen der Erfindung sind in den Unteransprüchen gekennzeichnet.

Ein Ausführungsbeispiel der Erfindung wird nachfolgend unter Bezugnahme auf die Zeichnung näher erläutert. In dieser zeigt:
- Figur 1: einen Drahthakenverbinder, in perspekiv- ischer Darstellung;
- Figur 2: das gestanzte Trägermaterial gemäss Fig. 1, in Draufsicht;
- Figur 3: einen einzelnen Drahthaken gemäss Fig. 1, in Seitenansicht;
- Figur 4: zwei an den Enden von Bändern montierte Drahthakenverbinder, in Draufsicht und
- Figur 5: die an den Bändern montierten Drahthaken- verbinder nach Figur 4, im Schnitt V-V.

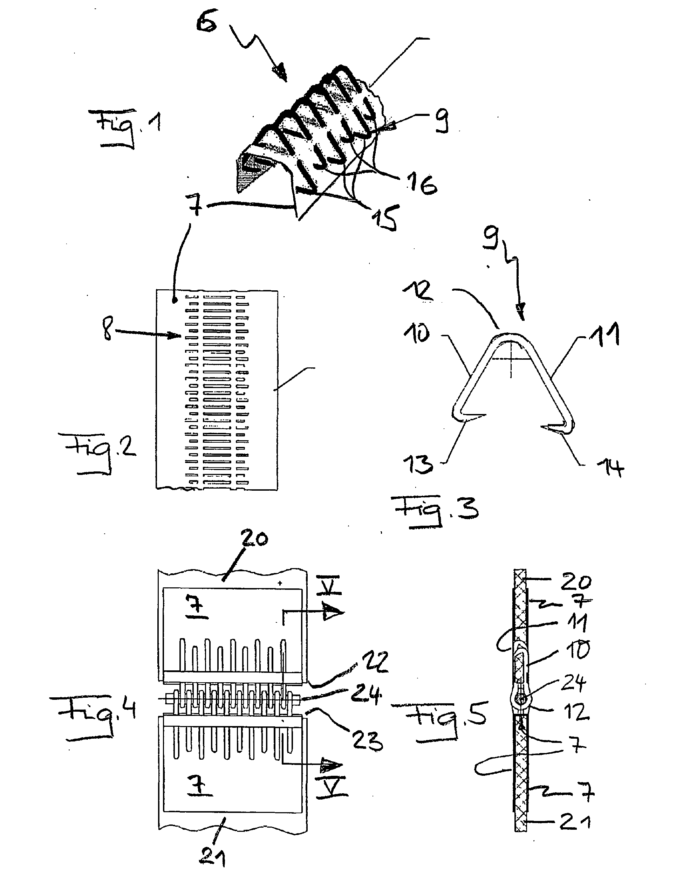

Der in Figur 1 gezeigte, insgesamt mit 6 bezeichnete Drahthakenverbinder weist ein in etwa U-förmig geformtes und nach unten offenes Trägermaterial 7 aus einem Textilgewebe, vorzugsweise einem Gewebeklebeband auf, das -wie in Figur 2 dargestelltmit einer Vielzahl von im Abstand sowie parallel zueinander angeordneter Ausstanzungen 8 ausgebildeten Ausnehmungen für einzelne Drahthaken 9 versehen ist.

Jeder v-förmig vorgebogene einzelne Drahthaken 9 aus (rundem) Stahldraht weist dabei zwei ungleich lange, in einem Winkel winklig zueinander verlaufende Hakenschenkel 10, 11 beiderseits des dabei gebildeten Knickbereichs 12 mit an deren Enden aufeinanderzu abgebogenen Hakenspitzen 13, 14 auf (Fig. 3).

Diese einzelnen Drahthaken 9 werden mit in die Vielzahl von Ausstanzungen 8 ebene Trägermaterial 7 eingesetzt. Bei dessen Falten zu der in Figur 1 gezeigten, nach unten offenen U-form werden die Drahthaken in den Ausstanzungen 8 unter Bildung des Drahthakenverbinders 6 fixiert. Die Grösse, Breite und der Abstand der Ausstanzungen 8 voneinander ist von der Grösse der Drahthaken 9 abhängig.

In dem Trägermaterial 7 ist dann eine Reihe 15 von einzelnen, nicht miteinander verbundenen, paarweise mit Abstand und parallel zueinander angeordneten Drahthaken 9 gefasst. Mittig zwischen einem zueinander benachbarten Paar von zueinander parallel angeordneten Drahthaken 9 ist jeweils ein bezüglich der durch deren Winkelhalbierenden gebildeten Ebene gespiegelt angeordneter Drahthaken angeordnet, die alle miteinander ebenfalls eine Reihe 16 von nicht miteinander verbundenen, paarweise mit Abstand und parallel zueinander angeordneten Drahthaken 9 bilden, so dass einem kurzen Hakenschenkel der einen Reihe 15 zwei lange Hakenschenkel der anderen Reihe 16 benachbart ist.

Die Drahthakenverbinder 6 werden an den beiden einander zugewandten Enden 22, 23 zweier Bänder 20, 22 durch Einpressen unter Wärmeeinwirkung montiert, wie in Figur 4 gezeigt. Die Hakenspitzen 13, 14 kommen dabei nicht auf der anderen Seite des Bandes heraus, sondern sind durch das Trägermaterial 7 abgedeckt. Zusätzlich ist die Kante jedes Endes 22, 23 des Bandes 20, 21 durch einen Teil des Trägertematerials 7 abgedeckt, wodurch dieses stabilisiert ist.

In die Lücken zwischen den durch die Drahthaken 9 gebildeten Bandnaht des einen Endes 22 des Bandes 20 sind die vorspringenden Drahthaken 9 des anderen Endes 23 des anderen Bandes 21 eingesetzt, und durch die dabei gebildete durchgängige Öffnung ist unter Bildung einer gelenkigen Verbindung ein Kupplungsstab 24 hindurchgesteckt.

## Patentansprüche

1. Band oder Gurt mit einem an seinem Ende unter Bildung einer sogenannten Bandnaht durch Einpressen der einzelnen Drahthaken angebrachten Drahthakenverbinder (6), der eine Reihe (15) paarweise mit Abstand und parallel zueinander angeordnete, nur an einem an einer Seite klebenden mit etwa U-förmig geformten, streifenförmigen Trägermaterial (7) in entsprechenden Ausnehmungen (8) gefassten und aus rundem oder flachen Stahldraht bestehende einzelne Drahthaken (9) aufweist, von denen jeder zwei ungleich lange, vor dem Einpressen in einem Winkel winklig zueinander verlaufende Hakenschenkel (10,11) beiderseits des Knickbereichs (12) mit an deren Enden aufeinanderzu abgebogenen Hakenspitzen (13,14) aufweist, die in das Band oder den Gurt eingepresst sind, wobei mittig zwischen einem zueinander benachbarten Paar von zueinander parallel angeordneten Drahthaken (9) ein bezüglich der durch deren Winkelhalbierenden gebildeten Ebene gespiegelt angeordneter Drahthaken (9) angeordnet ist, wobei die Drahthaken unter Wärmeeinwirkung in den Gurt oder das Band eingepresst sind,
- wobei das Trägermaterial (7) aus Textilgewebe ausgebildet ist,
- wobei die eine klebende Seite des Trägermaterials (7) dem Band oder Gurt (20,21) zugewandt, mit einer Heißklebeschicht versehen und durch Kleben und/oder Verschmelzen körperlich fest mit dem Band oder Gurt verbunden ist,
- wobei das Trägermaterial für jeden einzelnen Drahthaken drei Ausnehmungen aufweist,
- wobei das Trägermaterial (7) vollständig um die Kante (22,23) am Ende des Bandes oder Gurtes (20,21) herumgelegt ist,
- und im übrigen eine Abdeckung der Bandnaht bildet, **dadurch gekennzeichnet, daß** die Ausnehmungen als Ausstanzungen (8) ausgebildet sind und daß das Trägermaterial eine Höhennivellierung der Bandnaht bildet.

2. Angebrachter Drahthakenverbinder nach Anspruch 1, **dadurch gekennzeichnet, dass** das Textilgewebe als Gewebeklebeband ausgebildet ist.

## Claims

1. A conveyor or belt comprising a wire-hook connector (6) attached to the end thereof by forming a so-called conveyor splice by pressing the individual wire hooks, which wire-hook connector (6) has a series (15) of individual wire hooks (9) arranged spaced apart by pairs and parallel to one another, held only in corresponding recesses (8) on a carrier material (7) adhering to one side that is formed in an approximate U-shape and strip-shaped, each of which wire hooks (9) has two long hook legs (10, 11) of unequal length that run at an angle towards one another before the pressing procedure on either side of the buckling area (12), said hook legs including hook tips (13, 14) at ends thereof that are bent towards one another and pressed into the conveyor or belt, one of the wire hooks (9) being arranged centrally between a mutually adjacent pair of mutually parallel wire hooks (9), with mirror symmetry with respect to a plane formed by angle bisectors thereof,
- wherein the wire hooks are pressed into the belt or the conveyor with a supply of heat,
- wherein the carrier material (7) is made of textile fabric,
- wherein the one adhering side of the carrier material (7) faces the conveyor or belt (20, 21), is provided with a hot adhering layer and securely physically joined to the conveyor or belt by adhesive and/or fusing,
- wherein the carrier material has three recesses for each individual wire hook,
- wherein the carrier material (7) is laid completely around the edge (22, 23) at the end of the conveyor or belt (20, 21),
- and for the rest forms a cover of the conveyor splice, **characterized in that** the recesses are formed as punches (8) and that the carrier material forms a height leveler of the conveyor splice.

2. The attached wire-hook connector according to claim 1, **characterized in that** the textile fabric is formed as an adhesive fabric.

## Revendications

1. Bande ou courroie, comportant au niveau de son extrémité une agrafe à crochets (6) qui, moyennant la formation d'un raccord de courroie, est attachée par l'enfoncement des différents crochets en fil et qui comporte une rangée (15) de crochets en fil (9) individuels, qui sont réalisés en fil d'acier rond ou plat, sont disposés par paires à distance et parallèlement les uns aux autres, sont enfilés dans des évidements (8) correspondants uniquement sur un support (7) en forme de bande sensiblement en forme de U et adhésif sur une face, chaque crochet comportant deux branches (10, 11) de longueur différente qui s'étendent, avant l'enfoncement, en formant un angle entre elles de part et d'autre de la zone de pliage (12) et qui comportent, au niveau de leurs extrémités, des pointes (13, 14) repliées l'une vers l'autre, qui sont enfoncées dans la bande ou dans la courroie, sachant qu'au milieu entre une paire adjacente de crochets en fil (9) agencés parallèlement entre eux, est disposé un crochet en fil (9) qui est agencé symétriquement par rapport au plan formé par la bissectrice desdits crochets,
- les crochets en fil étant enfoncés dans la courroie ou la bande sous l'influence de la chaleur,
- le support (7) étant réalisé dans un tissu textile,
- la face adhésive du support (7) orientée vers la bande ou courroie (20, 21), étant munie d'une couche adhésive et étant assemblée de manière physiquement fixe à la bande ou courroie par collage et/ou fusion,
- le support comportant trois évidements pour chaque crochet individuel en fil,
- le support (7) étant posé complètement autour des bords (22, 23) de la bande ou courroie (20, 21) au niveau des extrémités de celle-ci,
- et formant, pour le reste, un cache du raccord de courroie,
**caractérisée en ce que** les évidements sont réalisés sous forme de perforations (8) et **en ce que** le support forme un nivellement de la hauteur du raccord de courroie.

2. Agrafe à crochets en fil attachée, selon la revendication 1, **caractérisée en ce que** le tissu textile est réalisé sous la forme d'une bande adhésive tissée.
